# EUROPEAN PATENT SPECIFICATION

(11) **EP 3 298 308 B1**
(45) Date of publication and mention of the grant of the patent: **28.04.2021**
(21) Application number: 16726031.4
(22) Date of filing: 16.05.2016
(51) Int. Cl.: F16K 15/02

(54) **POPPET VALVE**
KEGELVENTIL
SOUPAPE À CLAPET

(30) Priority: 21.05.2015 IT UB20150880
(43) Date of publication of application: 28.03.2018
(73) Proprietor: NUOVO PIGNONE TECNOLOGIE SRL, 50127 Florence (IT)
(72) Inventor: PRATELLI, Guido, 50127 Florence (IT); BAGAGLI, Riccardo, 50127 Florence (IT); MAGGI, Carmelo, 50127 Florence (IT)
(74) Representative: BRP Renaud & Partner mbB Rechtsanwälte Patentanwälte Steuerberater
(86) International application number: PCT/EP2016/060942
(87) International publication number: WO 2016/184827

(56) References cited:
- EP-A1- 0 520 567
- EP-A1- 1 416 205
- GB-A- 2 169 687
- US-A1- 2014 014 190

## Description

### TECHNICAL FIELD

Embodiments of the subject matter disclosed herein generally relate to differential pressure valves, i.e. to self-opening and self-closing valves, including a shutter, which opens and closes by effect of differential pressures across the valve. Typical differential pressure valves are reciprocating compressor valves. Some embodiments specifically refer to poppet valves of hyper compressors.

### BACKGROUND

Hyper compressors are reciprocating compressors that may produce gas pressure levels up to or above 3000 bars. Those compressors are widely used in industrial applications, for example in the compression of ethylene for the production of low-density polyethylene (or shortly 'LDPE'). Key components of those compressors are suction and discharge automatic poppet valves. Hyper compressor usually comprises a casing in which a cylinder is formed. A reciprocating plunger slides in the cylinder to aspirate a fluid from a suction duct and discharges the fluid at a higher pressure in a discharge duct.

US-A-2014/0014190 discloses a differential pressure valve comprising: a valve body, the valve body having at least one flow inlet and one flow outlet; at least one shutter, the shutter being movable between an open position and a closed position under a differential pressure across the valve; a flow passage from the flow inlet to the flow outlet; at least one biasing member configured to bias the shutter towards a closed position so as to block the flow passage through the flow inlet. The biasing member comprises at least two springs arranged in parallel, one of the springs having at least one resonance frequency different from at least one resonance frequency of the other of the two springs.

Documents EP-A-1416205, GB-A-2169687 and EP-A-520567 all apply polycrystalline synthetic diamonds in order to reduce wear and improve erosion resistant properties in the field of valves.

A first poppet valve is arranged in a suction duct and a second poppet valve is arranged in a discharge duct. Valves can be arranged either radially or axially with respect to the cylinder axis; they are thus referred to as radial-type poppet valves or axial-type poppet valves. Radial-type poppet valves are typically used on low pressure stages of hyper compressors, while axial-type poppet valves are typically used on high-pressure stages.

Opening and closing of the poppet valve is automatically controlled by differential pressure across the valve. For this reason, these valves are sometimes called "automatic valves" and distinguish over controlled valves, such as those commonly used in internal combustion engines, where an external actuator controls valve opening and closing, such as by way of a camshaft.

Poppet valves with a conventional design comprise a seat housing a poppet configured to open and close a gas flow path in and out of the hyper compressor. The poppet may be formed by a shutter and a stem at least partially housed in the seat.

The poppet is pushed in a closed position against a closure surface by a spring contained in the seat.

The suction poppet valve is arranged so that it opens when the pressure in the cylinder of the hyper compressor diminishes during the suction stroke of the piston rod. In that condition, the pressure in the suction duct overcomes the force of the spring; the differential pressure across the valve causes the movement of the poppet against the spring. In these conditions, the valve allows the fluid to be sucked in the compressor cylinder. During this phase, the discharge valve is closed.

Once the piston rod reaches the bottom dead center, its movement is reversed and compression of the fluid in the cylinder starts. Increased pressure in the cylinder automatically closes the suction valve and opens the discharge valve; this happens when the differential pressure across the discharge valve, between the compressor cylinder and the discharge duct, overcomes the force of the correspondent spring.

During its movement, the poppet is guided by the seat. For this reason, a poppet guiding surface is in mutual contact with a seat guiding surface to allow a controlled opening/closing movement of the poppet with respect to the seat. Poppet valves play an important role in the reliability of hyper compressors used in plants for the production of LDPE. In fact, one reason hyper compressors fail is because a poppet valve breaks.

Poppet valves mainly break when the seat loses its poppet guiding properties due to the wear of guiding surfaces. In those conditions, a loss of fit and uneven movement of the poppet while impacting on the seat may cause cracks that propagate in the seat or in the poppet, thereby damaging the valve and leading to compressor failure.

### SUMMARY

The invention is directed to a poppet valve as defined in claim 1. Preferred embodiments are defined in the dependent claims.

### BRIEF DESCRIPTION OF DRAWINGS

Figs 1 to 7 of the accompanying drawings, which are incorporated herein and constitute a part of the specification, illustrate exemplary embodiments of the present disclosure and, together with the detailed description, explain these embodiments. In the drawings:
Fig. 1 is a simplified cross sectional view of a high-pressure stage of a reciprocating compressor, in particular hyper compressor, according to the present disclosure;
Fig. 2 is a simplified top view of a radial-type poppet valve of the reciprocating compressor of Fig. 1;
Fig. 3 is a simplified section view, taken along the line III-III of Fig. 2, that also partially represents a valve body housing the poppet valve;
Fig. 4 shows in detail a particular of the poppet valve of Fig.3;
Fig. 5 shows another particular of the poppet valve of Fig 3;
Fig. 6 is a perspective view of the poppet valve of Fig 2;
Fig. 7 is an exploded, simplified view of the poppet valve of Fig 6;
Fig. 8 is a simplified axial section of an axial-type poppet valve;
Fig. 9 is a section taken along line IX-IX of Fig. 8;
Fig. 10 shows in section a possible configuration of a detail of the poppet valves above described;
Fig. 11 shows a perspective view of the poppet valve of Fig 8;
Fig. 12 is an exploded view of the poppet valve of Fig 11;
Fig. 13 is simplified section view, exploded, of a different embodiment of an axial-type poppet valve;
Fig. 14 is an exploded simplified section view of a further another different embodiment of an axial-type poppet valve, and
Fig. 15 is a simplified section view of a different embodiment of a part of the poppet valve of Fig. 13.

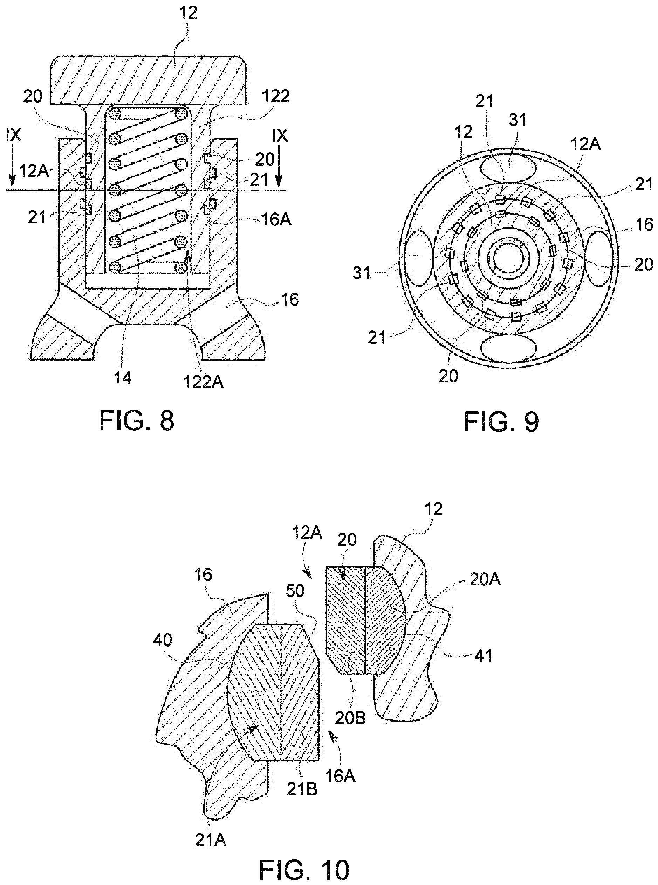

The embodiments according to figures 8-15 are not part of the invention.

### DETAILED DESCRIPTION

The following description of exemplary embodiments refers to the accompanying drawings.

The following description does not limit the present disclosure. Instead, the scope of the present disclosure is defined by the appended claims.

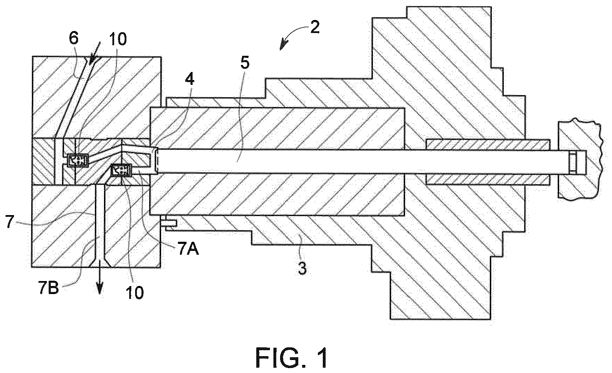

The description below refers to an improved differential pressure valve, and specifically a poppet valve of a centrifugal compressor such as a hyper compressor. The described poppet valve can be of the radial- or axial-type. Fig.1 shows a second stage of a reciprocating compressor, in particular a hyper compressor, comprising a casing 3 in which a cylinder 4 is formed. A reciprocating plunger 5 slides in the cylinder 4 to aspirate a fluid from a suction duct 6 and discharge the fluid at a higher pressure in a discharge duct 7. In Fig. 1, reference number 10 designates both poppet valves in the suction duct 6 and in the discharge duct 7, and both may have same design.

In the following description, only the poppet valve 10 present in the discharge duct 7 will be described, as it is identical to the one provided in the suction duct 6.

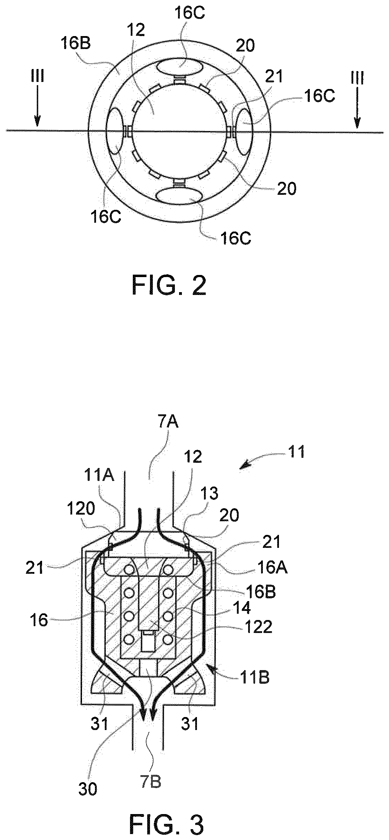

With reference to Fig. 3, a poppet valve 10 may comprise valve body 11 having an internal cavity 11B designed to stably house and fix a removable seat 16. The seat 16 at least partially houses a poppet 12.

The poppet 12 is configured to open and close the gas flow path out of the hyper compressor 1. A spring 14, that may be provided between the poppet 12 and the seat 16, pushes the poppet 12 in a closed position against a closure surface 11A formed by a portion of the internal surface of the valve body 11 surrounding a first part 7A of the discharge duct 7 communicating with the cylinder 4.

The internal cavity 11B of the valve body is further connected to a second part 7B of the discharge duct 7.

The poppet 12 comprises a poppet shutter 120 and a stem 122 extending from the poppet shutter 120. The spring is placed around the stem 122 and a first opening 30 may be provided on the bottom part of the seat 16. Further passages 31 are present in the seat, in order to put the second part 7B of the discharge duct 7 in communication with that part of the cavity 11B surrounding the seat 16.

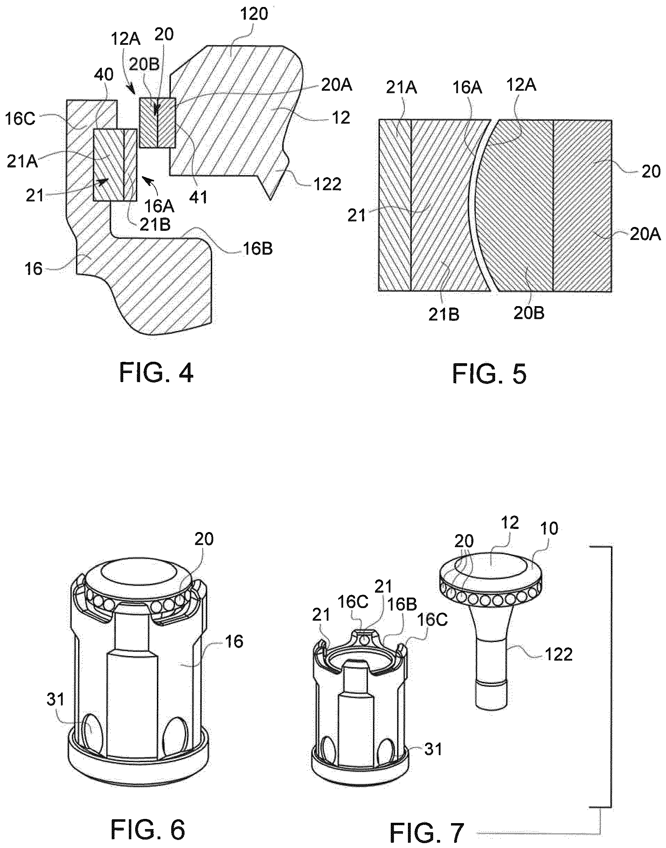

As it may be clear from Fig. 4 and Fig. 5, the poppet 12 has a poppet guiding surface 12A that is in mutual sliding contact with a seat guiding surface 16A. The poppet guiding surface 12A is located on the outer perimeter of the poppet shutter 120. The seat guiding surface 16A may be formed on protruding parts 16C extending from a seat resting surface 16B for the poppet 12.

In particular, the poppet guiding surface 12A and the seat guiding surface 16A are at least partially made of a material comprising synthetic polycrystalline diamond (PCD).

This may give to the poppet valve a longer service life.

In one embodiment, the poppet guiding surface 12A and/or the seat guiding surface 16A is defined by the outer shape of a plurality of pads 20, 21 fixed to the poppet 12 and to the seat 16. Both the guiding surfaces may be cylindrical, as shown in the drawings (see Fig. 5).

Each pad 20, located on the poppet 12, may have a pad guiding part 20B that defines the poppet guiding surface 12A, and a pad coupling part 20A fixed to the poppet 12; similarly, each pad 21 located on the seat 16, may have a pad guiding part 21B that defines the seat guiding surface 16A and a pad coupling part 21A fixed to the seat.

Pads 20, 21 are commercially available and their production process is known in the art.

The pad guiding part 20B, 21B may be made of diamond powder sintered in a matrix of cobalt.

The pad coupling part 20A, 21A may comprise tungsten carbide sintered in the same cobalt matrix of guiding part 20B, 21B.

The coupling part 20A, 21A may be fixed (e.g. brazed) to a corresponding part of the poppet 12 or of the seat 16. In particular, each pad 20, 21 may be placed in housings 40, 41 formed in the poppet 12 and/or in the seat 12. The housings 40, 41 may be recessed with respect to the poppet surface and/or with respect to the seat surface, and may have a shape that corresponds to the shape of the pads 20, 21.

In this case, the housings 40, 41 may firmly contain the pads 20, 21, preventing their movements.

Moreover, as shown in Fig. 10, each pad may have a rounded coupling part 20A, 21A matching the correspondent housing 40, 41 shape.

The rounded shape prevents the formation of cracks.

The pads 20, 21, in particular the ones provided on the seat 16, may also have a chamfered surface 50 as shown in Fig.10. This may help during the assembly phase of the poppet valve.

As it may be noticed in Fig. 2 and in Fig. 4, the seat 16 comprises a plurality of protruding parts 16C extending from a seat resting surface 16B for the poppet 16. The protruding parts 16C are configured to at least partially surround the poppet shutter 120 and the pads 21 are fixed to the protruding parts 16C.

In the described embodiment, four protruding parts 16C may be present, and each protruding part 16C may have one pad 21 as shown in Fig. 7. Depending on the shape and dimension of the protruding parts 16C, more than one pad 21 may be provided on the correspondent protruding part 16C.

The space present between the protruding parts 16C, form channels for the passage of the compressed gas from the first part of the discharge duct 7A, to the internal cavity 11B, and eventually to the second part 7B of it.

It should be noted that the material forming the poppet guiding surface 12A, the seat guiding surface 16A and the design of the pads 20, 21, may be also the one described in the non-prepublished patent application WO-A-2015/077001.

Figs. 8, 9, 11, 12, 13 and 14 show comparative examples.

In the description of the following embodiments, those parts functionally similar to the ones already described will be indicated with the same reference numbers, and their description will be omitted.

In this regard, it should be understood that all aspects identified as preferred and advantageous for those parts already described in the previous embodiments are to be deemed as similarly preferred and advantageous also for the similar parts in the following embodiments.

As it may be immediately noticed from Fig. 8, the stem 122 presents a cavity 122A housing the spring 14. Therefore, the poppet guiding surface 12A is located on the perimeter of the stem 122, externally with respect to the cavity 122A.

Accordingly, the seat guiding surface 16A is located on that surface of the seat 16 facing the poppet stem 122.

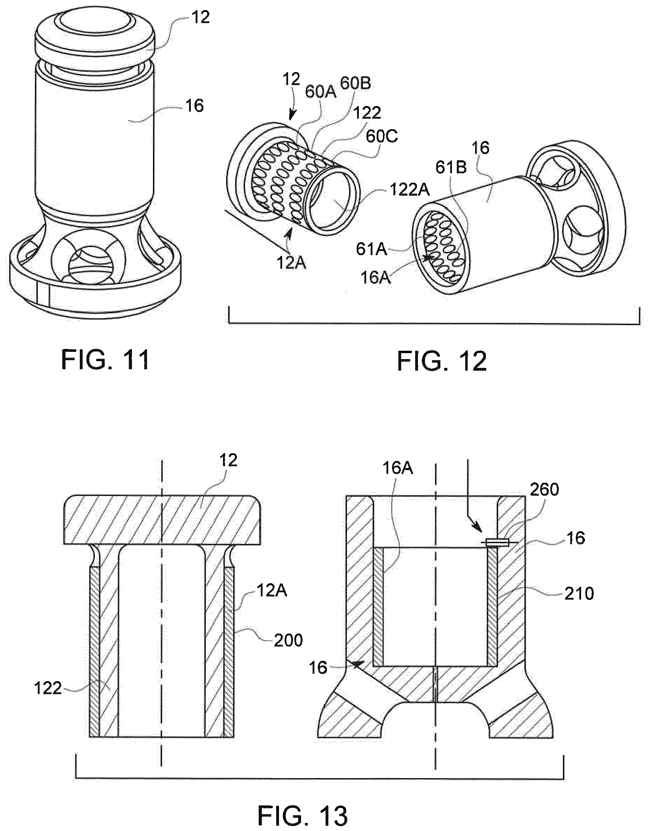

As it may be noticed from Fig.12, in this configuration, a plurality of circular crowns 60A, 60B, 60C, 61A, 61B of pads 20, 21 may be located on the stem surface and on the seat surface.

This configuration may give a wider guiding surface that may increase the stability of the poppet 12.

In the embodiment of Fig. 13, a poppet valve is shown, that is similar to the one of Fig. 11. Here the poppet guiding surface 12A may be defined by the outer surface of at least a bushing 200 fixed to the poppet 12, and more in particular to its stem 122. The bushing 200 may be fixed to the poppet 12 by interference.

The seat guiding surface 16A may be defined by the inner surface of at least a bushing 210 fixed to the seat 16, for example by a grub screw 260.

Similarly the pads 20, 21, the bushings 200, 210 may comprise polycrystalline diamond powder.

The bushings 200, 210 may be completely made of the same material of polycrystalline diamond powder sintered in a matrix of cobalt that forms the guiding part 20B, 21B of the pads 20, 21.

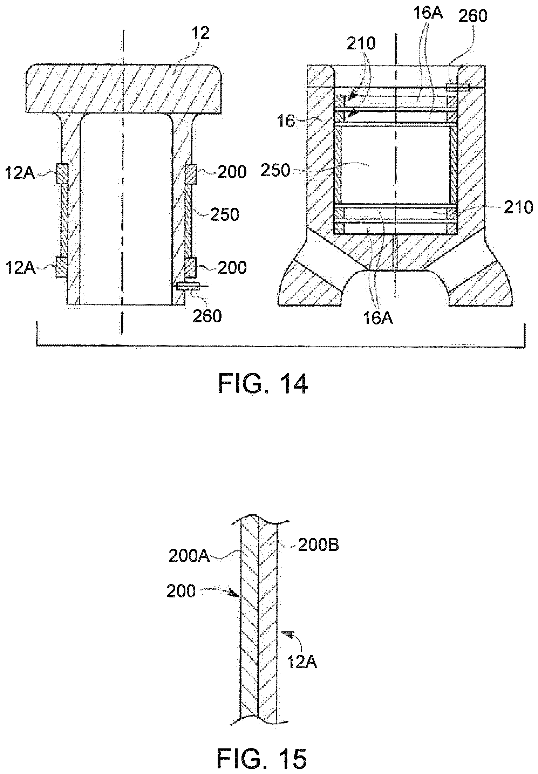

As an alternative, the bushings 200, 210 may have the configuration shown in Fig. 15. In this figure, only the bushing 200 coupled with the poppet 12 is shown, but the bushing 210 coupled with the seat 16 may have a similar configuration.

The bushing 200 of Fig. 15 has a bushing sliding surface 200B made of the same polycrystalline diamond powder sintered in a matrix of cobalt that forms the guiding part 20B, 21B of the pads 20, 21. The bushing 200 also has a bushing coupling part 200A that may be made of the same material of the pads coupling parts 20A, 21A.

Fig. 14 shows another embodiment of the poppet valve.

Here the poppet guiding surface 12A, is formed by the outer surface of two guiding bushings 200, distanced by a distancing element 250. The guiding bushings 200 and the distancing element 250 may be kept in position by a fastener, one example of which may include a grub screw 260.

The seat guiding surface 16A is formed by two couples of bushing 210 distanced by a distancing element 250. The bushings 210 and the distancing element 250 may be fixed to the seat 16 by a fastener, one example of which may include a grub screw 260.

Instead of two couples of bushings 210, only two bushing of increased height, properly distanced may be used.

## Claims

1. A poppet valve (10), comprising:
a poppet (12) having a poppet guiding surface (12A);
a seat (16) having a seat guiding surface (16A), the seat (16) being configured to house at least a part of the poppet (16); and
a spring (14) positioned between the seat and the poppet so as to push the poppet in a valve closed position,
the poppet guiding surface (12A) and the seat guiding surface (16A) being in mutual sliding contact;
**characterized in that**
the poppet guiding surface (12A) and the seat guiding surface (16A) being at least partially made of a material comprising polycrystalline synthetic diamonds;
wherein the poppet guiding surface (12A) is defined by an outer surface of a plurality of pads (20) fixed to the poppet (12) and the seat guiding surface (16A) is defined by an outer surface of a plurality of pads (21) fixed to the seat (16)
wherein the seat (16) comprises:
a seat resting surface (16B) for the poppet (16); and
a plurality of protruding parts (16C) extending from the seat resting surface (16B), the pads (21) being fixed to the protruding parts (16C),
the plurality of protruding parts (16C) being configured to surround at least partially the poppet shutter (120).

2. The poppet valve (10) of claim 1, wherein the material comprises polycrystalline synthetic diamonds sintered in a matrix of cobalt.

3. The poppet valve (10) of claim 1, wherein at least one pad (20, 21) comprises a coupling part (20A, 21A) fixed to the poppet (12) or to the seat (16), wherein the coupling part (20A, 21A) comprises tungsten carbide.

4. The poppet valve (10) of the preceding claim, wherein the at least one pad (20, 21) is brazed to the poppet (12) or to the seat (16).

5. The poppet valve (10) of claim 1, wherein the poppet guiding surface (12A) and/or the seat guiding surface (16A) is cylindrical, and is defined by the outer surface of the pads (20, 21).

6. The poppet valve (10) of claim 1, wherein the poppet (12) comprises a poppet shutter (120) and a stem (122) extending from the poppet shutter (120), the poppet guiding surface (12A) being positioned on the outer perimeter of the poppet shutter (120).

7. Reciprocating compressor comprising at least one poppet valve according to one or more of the preceding claims, the reciprocating compressor being preferably a hyper compressor.

## Patentansprüche

1. Tellerventil (10), umfassend:
einen Teller (12) mit einer Tellerführungsfläche (12A);
einen Sitz (16) mit einer Sitzführungsfläche (16A), wobei der Sitz (16) konfiguriert ist, um mindestens einen Teil des Tellerventils (16) aufzunehmen; und
eine Feder (14), die zwischen dem Sitz und dem Teller positioniert ist, um den Teller in eine geschlossene Ventilposition zu drücken,
wobei die Tellerführungsfläche (12A) und die Sitzführungsfläche (16A) in gegenseitigem Gleitkontakt stehen;
**dadurch gekennzeichnet, dass**
die Tellerführungsfläche (12A) und die Sitzführungsfläche (16A) zumindest teilweise aus einem Material hergestellt sind, das polykristalline synthetische Diamanten umfasst;
wobei die Tellerführungsfläche (12A) durch eine Außenoberfläche einer Vielzahl von Polstern (20) definiert ist, die an dem Teller (12) befestigt sind, und die Sitzführungsfläche (16A) durch eine Außenoberfläche einer Vielzahl von Polstern (21), die an dem Sitz (16) befestigt sind, definiert ist,
wobei der Sitz (16) umfasst:
eine Sitzauflagefläche (16B) für den Teller (16); und
eine Vielzahl von vorstehenden Teilen (16C), die sich von der Sitzauflagefläche (16B) erstrecken, wobei die Polster (21) an den vorstehenden Teilen (16C) befestigt sind,
wobei die Vielzahl von vorstehenden Teilen (16C) konfiguriert sind, um den Tellerverschluss (120) zumindest teilweise zu umgeben.

2. Tellerventil (10) nach Anspruch 1, wobei das Material polykristalline synthetische Diamanten umfasst, die in eine Matrix aus Kobalt gesintert sind.

3. Tellerventil (10) nach Anspruch 1, wobei mindestens ein Polster (20, 21) ein Kopplungsteil (20A, 21A) umfasst, das an dem Teller (12) oder an dem Sitz (16) befestigt ist, wobei das Kopplungsteil (20A, 21A) Wolframcarbid umfasst.

4. Tellerventil (10) nach dem vorhergehenden Anspruch, wobei das mindestens eine Polster (20, 21) an den Teller (12) oder an den Sitz (16) gelötet ist.

5. Tellerventil (10) nach Anspruch 1, wobei die Tellerführungsfläche (12A) und/oder die Sitzführungsfläche (16A) zylindrisch ist und durch die Außenoberfläche der Polster (20, 21) definiert ist.

6. Tellerventil (10) nach Anspruch 1, wobei der Teller (12) einen Tellerverschluss (120) und einen Schaft (122) umfasst, der sich von dem Tellerverschluss (120) erstreckt, wobei die Tellerführungsfläche (12A) an dem Außenumfang des Tellerverschlusses (120) positioniert ist.

7. Kolbenkompressor umfassend mindestens ein Tellerventil gemäß einem oder mehreren der vorhergehenden Ansprüche, wobei der Kolbenkompressor vorzugsweise ein Hyperkompressor ist.

## Revendications

1. Soupape à clapet (10), comprenant :
un clapet (12) ayant une surface de guidage de clapet (12A) ;
un siège (16) ayant une surface de guidage de siège (16A), le siège (16) étant configuré pour loger au moins une partie du clapet (16) ; et
un ressort (14) positionné entre le siège et le clapet de façon à pousser le clapet dans une position fermée de soupape,
la surface de guidage de clapet (12A) et la surface de guidage de siège (16A) étant en contact coulissant réciproque ;
**caractérisée en ce que**
la surface de guidage de clapet (12A) et la surface de guidage de siège (16A) sont au moins partiellement constituées d'un matériau comprenant des diamants synthétiques polycristallins ;
dans laquelle la surface de guidage de clapet (12A) est définie par une surface externe d'une pluralité de coussinets (20) fixés au clapet (12) et la surface de guidage de siège (16A) est définie par une surface externe d'une pluralité de coussinets (21) fixés au siège (16)
dans laquelle le siège (16) comprend :
une surface d'appui de siège (16B) pour le clapet (16) ; et
une pluralité de parties saillantes (16C) s'étendant à partir de la surface d'appui de siège (16B), les coussinets (21) étant fixés aux parties saillantes (16C),
la pluralité de parties saillantes (16C) étant configurée pour entourer au moins partiellement l'obturateur de clapet (120).

2. Soupape à clapet (10) selon la revendication 1, dans laquelle le matériau comprend des diamants synthétiques polycristallins frittés dans une matrice de cobalt.

3. Soupape à clapet (10) selon la revendication 1, dans laquelle au moins un coussinet (20, 21) comprend une partie d'accouplement (20A, 21A) fixée au clapet (12) ou au siège (16), dans laquelle la partie d'accouplement (20A, 21A) comprend du carbure de tungstène.

4. Soupape à clapet (10) selon la revendication précédente, dans laquelle l'au moins un coussinet (20, 21) est brasé au clapet (12) ou au siège (16).

5. Soupape à clapet (10) selon la revendication 1, dans laquelle la surface de guidage de clapet (12A) et/ou la surface de guidage de siège (16A) sont cylindriques, et sont définies par la surface externe des coussinets (20, 21).

6. Soupape à clapet (10) selon la revendication 1, dans laquelle le clapet (12) comprend un obturateur de clapet (120) et une tige (122) s'étendant à partir de l'obturateur de clapet (120), la surface de guidage de clapet (12A) étant positionnée sur le périmètre externe de l'obturateur de clapet (120).

7. Compresseur alternatif comprenant au moins une soupape à clapet selon l'une ou plusieurs des revendications précédentes, le compresseur alternatif étant de préférence un hypercompresseur.
